# EUROPEAN PATENT SPECIFICATION

(11) **EP 0 630 856 B1**
(45) Date of publication and mention of the grant of the patent: **27.11.1996**
(21) Application number: 94109023.5
(22) Date of filing: 13.06.1994
(51) Int. Cl.: C01G 9/04, C01G 9/00, C01G 49/06, C01G 21/00

(54) **Process for removing iron and manganese from acid solutions of zinc salts**
Verfahren zur Entfernung von Eisen und Mangan aus Säure-Zinksalz-Lösungen
Procédé d'élimination de fer et de manganése de solutions acides de sels de zinc

(30) Priority: 28.06.1993 IT MI931384
(43) Date of publication of application: 28.12.1994
(73) Proprietor: SANIMET S.p.A., I-25020 Flero (Brescia) (IT)
(72) Inventor: Pontoglio, Achille, I-25100 Brescia (IT); Garusi, Gianfranco, I-25127 Brescia (IT); Rossi, Adriano, I-20146 Milano (IT)
(74) Representative: Forattini, Amelia

(56) References cited:
- DE-A- 1 817 611
- FR-A- 2 042 960
- US-A- 1 973 300
- US-A- 3 148 944
- DATABASE WPI Derwent Publications Ltd., London, GB; AN 77-35053Y & JP-A-52 042 420 (TOHO BESLON)
- DATABASE WPI Derwent Publications Ltd., London, GB; AN 80-66078C & DD-A-142 701 (VEB LEUNA-WERK W ULBRICH)
- EGYPTIAN JOURNAL OF CHEMISTRY, vol.15, no.2, 1972, CAIRO pages 175 - 178 A.H. KAMEL ET AL 'preparation of pure zinc sulphate and zinc chloride from galvanization skimmings'

## Description

The present invention relates to a process for removing iron and manganese from acid solutions of zinc salts. Generally the field of the present invention regards polluted solutions obtained in galvanizing plants, in pickling iron or badly plated parts before zinc-plating. Particularly the invention relates to a solution containing hydrochloric acid that has a zinc ion concentration between 50 and 500 g/l, preferably between 150 and 400 g/l, and an iron ions concentration between 1 and 70 g/l, and a manganese concentration between 10 and 200 ppm, preferably between 50 and 150 ppm.

Since zinc solutions containing iron ions, usually ferrous ions, and other impurities, can hardly be recycled to other purposes, their treatment is often very expensive.

On the contrary it is common knowledge that ironless and manganeseless zinc solutions may be easily employed again in other industrial operations, sometimes in the plating plants themselves, and the iron removed from zinc may be recycled to other purposes.

Furthermore zinc solutions free from iron, manganese and heavy metals can be used in more interesting industrial processes with stricter requirements. This is particularly important because in this way the whole process can be remunerative.

It is common knowledge that neutralization of iron solutions, e.g. with sodium hydroxide, involves precipitations of iron hydroxide, which is very difficult to filter; moreover, increasing pH-value to about 6, also zinc precipitates together with iron as Zn(OH)₂.

It is also known that the ferrous ions may be oxidized to ferric ions, so that iron precipitates as Fe(OH)3. However applicant found that Fe(OH)₃ gives rise to a colloidal precipitate and its filtration is difficult to perform, for the Fe(OH)₃ slime obstructs filters; consequently filtration time is prolonged beyond any industrial benefit. Moreover, the obtained slimes are very gelatinous and retain mother liquor in plenty (they have a high titre of zinc, for instance about 30%).

US Patent No. 4 591 489 and French Patent No. 2 307 880 disclose processes for removing iron from zinc and iron solutions. According to these processes, an organic layer and a distinct aqueous one are used. Many additional plant and maintenance costs, which generally are exorbitant compared with the low value of these solutions, are involved if an organic layer is employed.

US Patent No. 3 600 128 dicloses a removal process based on the use of activated carbon. The carbon increases the filtering rate. Nevertheless, the iron is necessarily removed together with carbon and cannot be employed for other utilizations.

Rumanian Patent No 96 826 dicloses a process for recovering only a zinc sulfate solution, wherein a paste of zinc oxide and hydrogen peroxide is proposed. Nevertheless, the preparation of this mixture involves risk of decomposition and also of explosion if metallic impurities are present.

Furthermore none of the above prior art process discloses any means to remove manganese.

Egypt. J. Chem., 15, No 2, 175-178 (1972) discloses in a similar process an oxidizing treatment with H₂O₂ and an iron precipitation with ZnO. However no means to remove manganese from the solution is disclosed. Furthermore at the end of the process about 21 mg of iron and 104 mg of lead are still present for each kg of zinc. These amounts are by far not acceptable for recycling zinc.

FR 2 042 960 filed on 1970 discloses an oxidizing treatment with sodium chlorate and an iron precipitation with a mixture of NH₄OH and ZnO. Also in this case there is no teaching for the removal of manganese. Furthermore thousands of ppm of NH₄⁺ are introduced into the solution and cannot be removed. Finally it has been found that it is very difficult to filter the precipitated product.

DE 1 817 611 filed on 1968 discloses the treatment of wastes containing H₂SO₄ and not HCl and is therefore outside the field of the present invention. The oxidizing treatment is carried out with air and the precipitation with ZnO. Also a treatment with zinc sulfide is described. Also in this case there is no teaching for the manganese removal. In any case, at the end of the process 20000 mg of iron 10000 mg of copper, 1721 mg of cadmium are still present for each kg of zinc.

US 1 973 300 filed on 1932 and SU 1 479 419 teach exclusively the treatment of zinc sulphate solutions and therefore are outside the field of the present invention, also do not disclose any teaching to remove manganese.

Literature provides also electrochemical removal processes, whose complexity involves expensive operations and difficulties in order to obtain a sufficiently pure zinc.

Even if in more than 60 years many attempts were done to remove iron from zinc solutions, nevertheless, in industry zinc and iron solutions are not actually separated and recycled but only treated in purification plants; slime rises, which involves problems for environment and additional expenses.

An aim of the present invention is to overcome said disadvantages and to provide an industrial process which can be carried out in simple plants, at low cost and without needing specialized workers.

Another aim of the present invention is to remove iron quickly, though filtering with normal equipments.

A further aim is to obtain zinc solutions of high purity and very low iron content.

Another aim is to remove manganese which is a critical polluting element and prevents recycling in many other industrial uses.

A further object is the purification of zinc solutions not only from iron and manganese, but also from other impurities, particularly heavy metals, so that cleared solutions are obtained, suitable e.g. in production of dithiocarbamates, used as agricultural fungicides, or rubber polymerization agents, or in the plating plants themselves mixed with ammonium chloride.

Another object is the possibility of using iron, for instance as pigment in cement or bricks in building industries.

All these aims and other objects are achieved by the process, according to the present invention, for removing iron and manganese from solutions of zinc salts containing hydrochloric acid, having a zinc ion concentration between 50 and 500 g/l, an iron ions concentration between 1 and 70 g/l, and a manganese concentration between 10 and 200 ppm, characterized in that it comprises: a neutralization of free acid; a first oxidation step of ferrous ions to ferric ones by means of a first oxidizing agent selected in the group consisting of sodium chlorate, hydrogen peroxide, sodium hypochlorite, sodium chlorite; and an iron precipitation as a compound with formula (1)

Fe₂O₃ · Fe(OH)₃ (1)

in the form of easily filterable crystalline particles, said precipitation being obtained by means of an addition of zinc oxide before or after said first oxidation step; after the beginning of said crystallization a second oxidizing agent formed by potassium permanganate being added, so that manganese is precipitated as MnO₂; then the compound with formula (1) and MnO₂ being removed together by filtering.

The compound with formula (1) has a crystalline form and, above all, is easily filtered.

Preferably after the neutralization step, an amount of zinc oxide is added as stoichimetrically needed for said iron precipitation; this addition is followed by said oxidation causing a simultaneous iron precipitation.

The neutralization step can be performed with metallic zinc, economically advantageous, even if hydrogen is involved and ventilation is required; zinc oxide is preferably used.

The neutralization step increases pH-value without involving any iron precipitation and it is performed indifferently at room temperature or with heating.

According to a possible process, the stoichiometrically required amount of zinc oxide can be added after the oxidation so that iron precipitation occurs after the oxidation. According to a preferred process, zinc oxide is added to the zinc salt solution in such an amount as needed for both neutralization step and iron precipitation step; however precipitation does not occur at this stage. Oxidation step is performed after zinc oxide addition and consequently oxidation and precipitation occur at the same time.

The possibility of obtaining precipitation of the compounds of formula (1) in the oxidation step itself is very advantageous in practice. In this case the amount of zinc oxide that is added to the solution before the oxidation step must be stoichiometrically sufficient to cause precipitation of all the iron present in the solution.

In the preferred process, oxidation step is performed by adding sodium chlorate. In particular, sodium chlorate, compared with other oxidizing substances, as for instance sodium hypochlorite or chlorite, has following advantages: it has a low cost, it adds a restricted amount of sodium ions to solutions, it reacts quickly at relatively low temperatures.

On the other hand, hydrogen peroxide, even if it has the advantage that no sodic ions are added to the solution, is economically disadvantageous.

The oxidation step is performed after neutralization of free acid. Therefore the compound with formula (2) is obtained

2FeCl₃ · Fe(OH)₃ (2)

from which the compound of formula (1) can be easily produced.

The oxidation step is preferably carried out at temperature between 20°C and the boiling point of the solution, preferably between 75°C and 90°C.

Preferably the second oxidizing agent, i.e., potassium permanganate is added after at least 15 minutes and more preferably after 30 minutes from the beginning of the iron precipitation. It has been found that this time period prevents that iron, instead of manganese, is oxidized by the second oxidizing agent.

Preferably during the second oxidation the reaction medium is stirred to improve the contact between the compound of formula (1) and MnO₂.

Applicant has found that the precipitation of manganese with potassium permanganate cannot be obtained before iron precipitation or after that iron has been removed from the medium. In fact, before iron precipitation the addition of potassium permanganate may give rise to a partial iron precipitation, but not to manganese precipitation. After that iron has been removed from the medium the addition of potassium permanganate does not give rise to any manganese precipitation at all. In this last case it is possible to obtain only a pale yellow colloidal suspension of MnO₂ which does not precipitate at all and which cannot be filtered.

Surprisingly MnO₂ can be easily removed if potassium permanganate is added when the crystals of the compound of formula (1) are still present in the medium. In this last case the obtained suspension easily decants. However it is preferable to filter the solution because this operation does not give rise to problems and is extremely fast. In other words there is a synergistic effect in the process according to claim 1 because the removal of iron as compound of formula (1) and of manganese as MnO₂ can be carried out only at the same time, as claimed.

It is preferable to carry out a limited washing of the filtered cake with water to recover more than 95% of zinc chloride impregnating the cake.

It has been noted that the cake contains not only iron and manganese, but also the major part of the polluting elements originally present in the starting solution, because, during the process a coprecipitation of many inorganic impurities occurs. For example copper decreases from a starting concentration higher than 5 ppm to a final concentration of less than 1 ppm, and also lead concentration is substantially reduced.

After the above filtration, a preferred subsequent step of the process is the addition to the solution of a stoichiometrical amount of a soluble alkaline sulphide, preferably ammonium sulphide. This addition gives rise to the precipitation of antimony, arsenic, copper, mercury, tin, bismuth. In fact it is obtained a light precipitate of the sulphides of the above metals. This precipitate can be easily recovered with a common paper or cloth filter. It has been found that this precipitation does not occur if the sulphide addition is carried out before the filtering of the compound of formula (1) and manganese.

It has been found that in the above conditions surprisingly lead sulphide does not precipitate, even when changing the pH. It should be noted that the treatment of a solution having a high saline concentration of zinc chloride is particularly difficult because these solutions have a surprising behaviour.

Preferably a cationic ion exchange resin is used to remove the remaining amount of lead and other little amounts of impurities. Advantageously the removal of the major part of the polluting elements with the preceding treatments dramatically decreases the charge on the ion exchange resin, so that the life time of the resin before regeneration is extremely long.

The invention will be better explained by the following examples, whose purpose is descriptive and not restrictive.

### Example 1

1 liter of polluted starting zinc chloride solution contains: 190 g/l of zinc, 16 g/l of iron, 19 g/l of hydrochloric acid, 100 mg/l of manganese, and about 32 mg/l of lead, 5 mg/l of antimony, 1 mg/l of arsenic, 3 mg/l of copper, 0,01 mg/l of mercury, 1 mg/l of tin, 1 mg/l of bismuth. The solution is set in a stirred Becker. 46.8 g of ZnO are added to the solution, i.e. a slight excess with respect to the stoichiometric amount. The ZnO amount added to the solution is required for acid neutralization and iron precipitation.

A clouding of the solution is noted for the formation of oxichlorides, while the pH rises over 5.

The solution is then warmed at about 85°C and 30.5 cc of a 250 g/l solution of sodium chlorate are added. Precipitation of the compound of formula (1) is obtained.

After 1 hour 200 mg of KMnO₄ are added under stirring. The solution is filtered in a sintered porous G-3 Buchner funnel, diameter 120 mm, under suction. Time required: 4 minutes. The cake is washed with 70 cc of water. The obtained solution has pH=4.5 at 20°C.

The cake contains very limited amounts of incorporated zinc: about 0.16 g. Therefore the lost of this ion is negligible.

The obtained solution contains: 212 g/l of Zn, less than 1 ppm of iron, 2 mg/l of manganese, 15 mg/l of lead, 4 mg/l of antimony, 1 mg/l of arsenic, 0,5 mg/l of copper, 0,01 mg/l of mercury, 0,8 mg/l of tin, 0,6 mg/l of bismuth.

### Example 2 (comparison)

Example 1 is repeated except that KMnO₄ is not added to the solution.

The obtained solution is pale yellow and contains: 212 g/l of Zn, less than 1 ppm of iron, 98 mg/l of manganese, 15 mg/l of lead, 4 mg/l of antimony, 1 mg/l of arsenic, 0,5 mg/l of copper, 0,01 mg/l of mercury, 0,8 mg/l of tin, 0,6 mg/l of bismuth.

### Example 3 (comparison)

Example 1 is repeated except that KMnO₄ is added to the solution after filtering the compound of formula (1). Then the solution is filtered again.

The obtained solution is pale yellow and contains: 212 g/l of Zn, less than 1 ppm of iron, 72 mg/l of manganese, 16 mg/l of lead, 4 mg/l of antimony, 1 mg/l of arsenic, 0,6 mg/l of copper, 0,01 mg/l of mercury, 0,8 mg/l of tin, 0,6 mg/l of bismuth.

### Example 4

1.7 cc of 0.1 mol/l ammonium sulphide are added to the solution obtained at the end of example 1 after filtration, at a temperature of 40°C. A light clouding is obtained and after 1 hour the solution is filtered on paper.

The obtained solution contains: 212 g/l of Zn, less than 1 ppm of iron, 2 mg/l of manganese, 15 mg/l of lead, 1 mg/l of antimony, 0,2 mg/l of arsenic, 0,2 mg/l of copper, 0,001 mg/l of mercury, 0,2 mg/l of tin, 0,2 mg/l of bismuth.

### Example 5

The solution obtained at the end of example 4 is finally treated with a previously activated cationic ion exchange resin. The column is 40 cm high and has an apparent volume of about 250 cc. The complete treatment is carried out in about 30 minutes.

The obtained solution contains: 212 g/l of Zn, less than 0.5 ppm of iron, 2 ppm of manganese, 1 mg/l of lead, 0,1 mg/l of antimony, 0,1 mg/l of arsenic, 0,1 mg/l of copper, 0,001 mg/l of mercury, 0,1 mg/l of tin, 0,1 mg/l of bismuth.

## Claims

1. A process for removing iron and manganese from solutions of zinc chloride containing hydrochloric acid, having a zinc ion concentration between 50 and 500 g/l, an iron ions concentration between 1 and 70 g/l, and a manganese concentration between 10 and 200 ppm, characterized in that it comprises: a neutralization of free acid; a first oxidation step of ferrous ions to ferric ones by means of a first oxidizing agent selected in the group consisting of sodium chlorate, hydrogen peroxide, sodium hypochlorite, sodium chlorite; and an iron precipitation as a compound with formula (1)
Fe₂O₃ · Fe(OH)₃ (1)
in the form of easily filterable crystalline particles, said precipitation being obtained by means of an addition of zinc oxide before or after said first oxidation step; after the beginning of said crystallization a second oxidizing agent formed by potassium permanganate being added, so that manganese is precipitated as MnO₂; then the compound with formula (1) and MnO₂ being removed together by filtering.

2. A process as in claim 1, wherein after said neutralization step an amount of zinc oxide is added, and then said first oxidation step follows, while precipitation takes place at the same time.

3. A process according to at least one of the preceding claims, wherein the solutions of zinc salt are treated with an amount of zinc oxide sufficient for both neutralization step and iron precipitation, and this operation is followed by said first oxidation step, so that oxidation and precipitation occur simultaneously.

4. A process according to at least one of the preceding claims, wherein said first oxidation step is obtained with sodium chlorate.

5. A process according to at least one of the preceding claims, wherein the process is performed at a temperature between 20°C and the boiling point of the solution, preferably between 75° and 90°C.

6. A process according to at least one of the preceding claims, wherein said neutralization step is carried out by means of the addition of metallic zinc, zinc oxide, carbonate, bicarbonate, hydroxide of an alkaline or alkaline-earth metal, or mixtures thereof.

7. A process according to at least one of the preceding claims in which zinc oxide is added in a stoichiometric amount with respect to iron.

8. A process according to at least one of the preceding claims in which said second oxidizing agent is added after at least 15 minutes and preferably after 30 minutes from the beginning of said iron precipitation.

9. A process according to at least one of the preceding claims in which the reaction medium is stirred.

10. A process according to at least one of the preceding claims in which after said filtering, heavy metals, except lead, are precipitated by adding a sulfide, preferably ammonium sulfide, and the precipitated heavy metals are then filtered.

11. A process according to claim 10 comprising a subsequent treatment with a cationic ion exchange resin to remove lead and possibly remaining polluting elements.

## Patentansprüche

1. Verfahren zum Entfernen von Eisen und Mangan aus Salzsäure-haltigen Zinkchlorid-Lösungen, die eine Zinkionen-Konzentration zwischen 50 und 500 g/l, eine Eisenionen-Konzentration zwischen 1 und 70 g/l und einer Mangan-Konzentration zwischen 10 und 200 ppm aufweisen, dadurch gekennzeichnet, daß es umfaßt: Neutralisation von freier Säure, einen ersten Oxidationsschritt von Eisen(II)- zu Eisen(III)-Ionen mittels eines ersten Oxidationsmittels ausgewählt aus der Gruppe, bestehend aus Natriumchlorat, Wasserstoffperoxid, Natriumhypochlorit, Natriumchlorit, und Ausfällen des Eisens als eine Verbindung mit der Formel (1)
Fe₂O₃ · Fe(OH)₃ (1)
In Form von leicht filtrierbaren kristallinen Teilchen, wobei das Ausfällen mittels Zugabe von Zinkoxid vor oder nach dem ersten Oxidationsschritt erreicht wird; wobei nach Beginn der Kristallisation ein zweites Oxidationsmittel gebildet durch Kaliumpermanganat, zugegeben wird, so daß Mangan als MnO₂ ausgefällt wird; dann werden die Verbindungen mit der Formel (1) und MnO₂ zusammen durch Filtrieren entfernt.

2. Verfahren nach Anspruch 1, worin nach dem Neutralisationsschritt eine Menge Zinkoxid zugegeben wird, und dann der erste Oxidationsschritt folgt, während das Ausfällen zur gleichen Zeit stattfindet.

3. Verfahren nach mindestens einem der vorangegangenen Ansprüche, worin die Zinksalzlösungen mit einer ausreichenden Menge Zinkoxid sowohl für den Neutralisationsschritt und als auch für das Eisen-Ausfällen behandelt werden, und diesem Vorgang folgt der erste Oxidationsschritt, so daß die Oxidation und das Ausfällen gleichzeitig stattfinden.

4. Verfahren nach mindestens einem der vorangegangenen Ansprüche, worin der erste Oxidationsschritt mit Natriumchlorat erzielt wird.

5. Verfahren nach mindestens einem der vorangegangenen Ansprüche, worin das Verfahren bei einer Temperatur zwischen 20°C und dem Siedepunkt der Lösung, bevorzugt zwischen 75° und 90°C durchgeführt wird.

6. Verfahren nach mindestens einem der vorangegangenen Ansprüche, worin der Neutralisationsschritt durchgeführt wird durch Zugabe von metallischem Zink, Zinkoxid, Carbonat, Bicarbonat, Hydroxid eines Alkali- oder Erdalkalimetalls oder Gemischen davon.

7. Verfahren nach mindestens einem der vorangegangenen Ansprüche, worin Zinkoxid in einer stöchiometrischen Menge in Bezug auf Eisen zugefügt wird.

8. Verfahren nach mindestens einem der vorangegangenen Ansprüche, worin das zweite Oxidationsmittel nach mindestens 15 Minuten und bevorzugt nach 30 Minuten ab Beginn des Ausfällens des Eisens zugefügt wird.

9. Verfahren nach mindestens einem der vorangegangenen Ansprüche, worin das Reaktionsmedium gerührt wird.

10. Verfahren nach mindestens einem der vorangegangenen Ansprüche, worin nach dem Filtrieren Schwermetalle, mit Ausnahme von Blei, ausgefällt werden durch Zufügen eines Sulfids, bevorzugt Amoniumsulfid, und die ausgefällten Schwermetalle dann filtriert werden.

11. Verfahren nach Anspruch 10, welches eine nachfolgende Behandlung mit einem kationischen Ionenaustauscherharz umfaßt, um Blei und mögliche zurückbleibende verunreinigende Elemente zu entfernen.

## Revendications

1. Procédé d'élimination de fer et de manganèse de solutions de chlorure de zinc contenant de l'acide chlorhydrique, ayant une concentration en ions zinc comprise entre 50 et 500 g/L, une concentration en ions fer comprise entre 1 et 70 g/L, et une concentration en manganèse comprise entre 10 et 200 ppm, caractérisé en ce qu'il comprend: une neutralisation d'acide libre ; une première étape d'oxydation des ions ferreux en ions ferriques à l'aide d'un premier agent oxydant choisi dans le groupe constitué par le chlorate de sodium, le peroxyde d'hydrogène, l'hypochlorite de sodium, le chlorite de sodium ; et une précipitation du fer sous forme d'un composé répondant à la formule (1)
Fe2O3,Fe(OH)3 (1)
sous forme de particules cristallines facilement filtrables, ladite précipitation étant réalisée par addition d'oxyde de zinc avant ou après ladite première étape d'oxydation; après le début de ladite cristallisation, un second agent oxydant composé de permanganate de potassium étant ajouté de manière à précipiter le manganèse sous forme de MnO2; ensuite, le composé de formule (1) et MnO2 étant éliminés ensemble par filtration.

2. Procédé selon la revendication 1, dans lequel après ladite étape de neutralisation, on ajoute une certaine quantité d'oxyde de zinc, puis on poursuit par ladite première étape d'oxydation, pendant que la précipitation se produit en même temps.

3. Procédé selon l'une au moins des revendications précédentes, dans lequel les solutions de sel de zinc sont traitées avec une quantité d'oxyde de zinc suffisante à la fois pour l'étape de neutralisation et la précipitation du fer, et cette opération est suivie de ladite première étape d'oxydation, de manière que l'oxydation et la précipitation se produisent simultanément.

4. Procédé selon l'une au moins des revendications précédentes, dans lequel ladite première étape d'oxydation est réalisée avec du chlorate de sodium.

5. Procédé selon l'une au moins des revendications précédentes, dans lequel le procédé est réalisé à une température comprise entre 20°C et le point d'ébullition de la solution, de préférence entre 75°C et 90°C.

6. Procédé selon l'une au moins des revendications précédentes, dans lequel ladite étape de neutralisation est réalisée par addition de zinc métallique, d'oxyde de zinc, de carbonate, bicarbonate, hydroxyde d'un métal alcalin ou alcalino-terreux, ou des mélanges de ceux-ci.

7. Procédé selon l'une au moins des revendications précédentes, dans lequel l'oxyde de zinc est ajouté en une quantité stoechiométrique par rapport au fer.

8. Procédé selon l'une au moins des revendications précédentes, dans lequel ledit second agent oxydant est ajouté au moins 15 minutes, et de préférence 30 minutes, après le début de ladite précipitation du fer.

9. Procédé selon l'une au moins des revendications précédentes, dans lequel le milieu réactionnel est agité.

10. Procédé selon l'une au moins des revendications précédentes, dans lequel après ladite filtration, les métaux lourds, sauf le plomb, sont précipités par addition d'un sulfure, de préférence le sulfure d'ammonium, et les métaux lourds précipités sont ensuite filtrés.

11. Procédé selon la revendication 10, comprenant un traitement ultérieur avec une résine cationique échangeuse d'ions pour éliminer le plomb et les éléments polluants restant éventuellement.
